# EUROPÄISCHE PATENTSCHRIFT

(11) **EP 1 609 654 B1**
(45) Veröffentlichungstag und Bekanntmachung des Hinweises auf die Patenterteilung: **05.11.2008**
(21) Anmeldenummer: 05012086.4
(22) Anmeldetag: 04.06.2005
(51) Int. Cl.: B60K 17/02, F16D 25/0638, F16D 25/10

(54) **Drehmomentübertragungseinrichtung**
Torque transfer device
Dispositif de transfert de couple

(30) Priorität: 21.06.2004 DE 102004029777
(43) Veröffentlichungstag der Anmeldung: 28.12.2005
(73) Patentinhaber: LuK Lamellen und Kupplungsbau Beteiligungs KG, 77815 Bühl (DE)
(72) Erfinder: Agner, Ivo, 77815 Brühl (DE)

(56) Entgegenhaltungen:
- EP-A- 1 174 631
- DE-A1- 10 114 281
- DE-A1- 10 231 405
- DE-C1- 10 223 780
- DE-U1- 20 310 015

## Beschreibung

Die Erfindung betrifft eine Drehmomentübertragungseinrichtung im Antriebsstrang eines Kraftfahrzeugs zur Drehmomentübertragung zwischen einer Antriebseinheit, insbesondere einer Brennkraftmaschine, mit einer Abtriebswelle, insbesondere einer Kurbelwelle, und einem Getriebe mit mindestens einer Getriebeeingangswelle, wobei zwischen der Getriebeeingangswelle und der Abtriebswelle der Brennkraftmaschine eine Kupplungseinrichtung mit mindestens einem Eingangsteil geschaltet ist, die einen Kupplungsgehäuseabschnitt, insbesondere einen Kupplungsdeckel, aufweist, der das die Kupplungseinrichtung aufnehmende Volumen begrenzt und sich an einem Getriebegehäuseabschnitt abstützt.

Durch die DE 102 31 405 A1, die den Oberbegriff des Anspruchs 1 bildet, ist eine Kupplungseinrichtung mit integrierten Druckkammern zum Betätigen der einzelnen Kupplungen der Kupplungseinrichtung bekannt geworden.

Aufgabe der Erfindung ist es, eine einfach aufgebaute und kostengünstig herstellbare Drehmomentübertragungseinrichtung gemäß Oberbegriff des Anspruchs 1 zu schaffen, bei der in der Kupplungseinrichtung weniger Schwingungen in axialer Richtung auftreten als bei herkömmlichen Drehmomentübertragungseinrichtungen.

Die Aufgabe ist bei einer Drehmomentübertragungseinrichtung im Antriebsstrang eines Kraftfahrzeugs zur Drehmomentübertragung zwischen einer Antriebseinheit, insbesondere einer Brennkraftmaschine, mit einer Abtriebswelle, insbesondere einer Kurbelwelle, und einem Getriebe mit mindestens einer Getriebeeingangswelle, wobei zwischen die beziehungsweise der Getriebeeingangswelle und die beziehungsweise der Abtriebswelle der Antriebseinheit eine Kupplungseinrichtung mit mindestens einem Eingangsteil geschaltet ist, die einen Kupplungsgehäuseabschnitt, insbesondere einen Kupplungsdeckel, aufweist, der das die Kupplungseinrichtung aufnehmende Volumen begrenzt und sich an einem Getriebegehäuseabschnitt abstützt, dadurch gelöst, dass die Kupplungseinrichtung eine nass laufende Kupplungsanordnung, insbesondere eine Lamellen-Kupplungsanordnung, umfasst, die durch Betätigungshebel betätigbar ist, welche drehfest mit dem Eingangsteil der Kupplungseinrichtung verbunden sind und von außen über eine Aktorik betätigt werden, wobei weiterhin das die Betätigungshebel abstützende Eingangsteil der Kupplungseinrichtung mit Hilfe einer Lagereinrichtung in axialer Richtung an dem Kupplungsgehäuseabschnitt gelagert beziehungsweise abgestützt ist. Durch die erfindungsgemäße Lagerung des Kupplungseingangsteils können Lagereinrichtungen zwischen dem Eingangsteil der Kupplungseinrichtung und der Getriebeeingangswelle oder der Abtriebswelle der Antriebseinheit entfallen.

Hebelbetätigte Nasskupplungen haben den Nachteil, dass die von außen über eine entsprechende Aktorik eingebrachten Betätigungskräfte abgestützt werden müssen. Es ist möglich, das Kupplungseingangsteil in axialer Richtung an der Kurbelwelle der Brennkraftmaschine abzustützen. Die Lagerung beziehungsweise Abstützung des Kupplungseingangsteils in radialer Richtung kann zum Beispiel durch ein Nadellager oder ein Gleitlager erfolgen, das in radialer Richtung an der Getriebeeingangswelle abgestützt ist. Im Rahmen der vorliegenden Erfindung wurde herausgefunden, dass bei einer Abstützung das Kupplungseingangsteil in axialer Richtung an der Kurbelwelle Biegeschwingungen, die aufgrund von Gaswechselkräften der Brennkraftmaschine entstehen, in Form einer Axialschwingung direkt auf die Nasskupplungsanordnung übertragen werden. Da die Einrücker bei hebelbetätigten Nasskupplungen am Getriebegehäuse abgestützt werden, übertragen sich diese Schwingungen auf die Betätigungshebel und können die eingestellte Anpresskraft verfälschen. Durch die erfindungsgemäße Drehmomentübertragungseinrichtung wird eine kostengünstige Lösung geschaffen, die sowohl eine radiale als auch eine axiale Abstützung der Nasskupplung und eine axial schwingungsfreie Lagerstelle ermöglicht.

Ein weiteres bevorzugtes Ausführungsbeispiel der Drehmomentübertragungseinrichtung ist dadurch gekennzeichnet, dass zwischen dem Eingangsteil der Kupplungseinrichtung und dem Kupplungsgehäuseabschnitt eine Axiallagereinrichtung angeordnet ist. Bei der Axiallagereinrichtung kann es sich zum Beispiel um ein Axialrollenlager oder ein Axialnadellager handeln. Es kann aber auch ein Axialgleitlager vorgesehen werden.

Ein weiteres bevorzugtes Ausführungsbeispiel der Drehmomentübertragungseinrichtung ist dadurch gekennzeichnet, dass zwischen dem Eingangsteil der Kupplungseinrichtung und dem Kupplungsgehäuseabschnitt oder zwischen dem Eingangsteil der Kupplungseinrichtung und der mindestens einen Getriebeeingangswelle eine Radiallagereinrichtung angeordnet ist. Die Radiallagereinrichtung kann direkt auf einer der Getriebeeingangswellen oder über Naben auf einer der Getriebeeingangswellen abgestützt sein.

Ein weiteres bevorzugtes Ausführungsbeispiel der Drehmomentübertragungseinrichtung ist dadurch gekennzeichnet, dass die Axiallagereinrichtung, vorzugsweise ein Axialrollenlager, radial außerhalb eines Endes des Kupplungsgehäuseabschnitts, insbesondere eines Kupplungsdeckels, angeordnet ist.

Ein weiteres bevorzugtes Ausführungsbeispiel der Drehmomentübertragungseinrichtung ist dadurch gekennzeichnet, dass die Radiallagereinrichtung radial innerhalb eines Radialwellendichtrings angeordnet ist.

Ein weiteres bevorzugtes Ausführungsbeispiel der Drehmomentübertragungseinrichtung ist dadurch gekennzeichnet, dass die Radiallagereinrichtung axial überlappend zu dem Radialwellendichtring angeordnet ist.

Ein weiteres bevorzugtes Ausführungsbeispiel der Drehmomentübertragungseinrichtung ist dadurch gekennzeichnet, dass die Radiallagereinrichtung in radialer Richtung zwischen einem Schenkel des Kupplungseingangsteils und einem Nabenteil angeordnet ist.

Ein weiteres bevorzugtes Ausführungsbeispiel der Drehmomentübertragungseinrichtung ist dadurch gekennzeichnet, dass die Radiallagereinrichtung und die Axiallagereinrichtung aus einem einzigen Teil oder aus mehreren Teilen gebildet sind. Die Radiallagereinrichtung und die Axiallagereinrichtung können zum Beispiel als Gleitlager oder als Nadellager ausgebildet sein.

Ein weiteres bevorzugtes Ausführungsbeispiel der Drehmomentübertragungseinrichtung ist dadurch gekennzeichnet, dass die Lagereinrichtung, zum Beispiel eine Dünnringkugellagereinrichtung, so gestaltet und zwischen dem Kupplungsgehäuseabschnitt und dem Eingangsteil der Kupplungseinrichtung angeordnet ist, dass das Eingangsteil der Kupplungseinrichtung sowohl in radialer als auch in axialer Richtung an dem Kupplungsgehäuseabschnitt abgestützt wird. Die Dünnringkugellagereinrichtung wird wegen der geringen Reibungsverluste bevorzugt.

Ein weiteres bevorzugtes Ausführungsbeispiel der Drehmomentübertragungseinrichtung ist dadurch gekennzeichnet, dass die Lagereinrichtung eine gegenüber der radialen Richtung verkippte Berührungsnormale aufweist. Dadurch wird auf einfache Art und Weise eine Abstützung sowohl in radialer als auch in axialer Richtung ermöglicht.

Ein weiteres bevorzugtes Ausführungsbeispiel der Drehmomentübertragungseinrichtung ist dadurch gekennzeichnet, dass zwischen dem Kupplungsgehäuseabschnitt und dem Eingangsteil der Kupplungseinrichtung eine Gleitlagereinrichtung angeordnet ist. Die Gleitlagereinrichtung kann sowohl in radialer als auch in axialer Richtung wirksam sein, also zum Beispiel mit einer axialen Anlauffläche versehen sein. Die Funktionen Axial- und Radialabstützung der Gleitlagereinrichtung können aber auch getrennt sein.

Ein weiteres bevorzugtes Ausführungsbeispiel der Drehmomentübertragungseinrichtung ist dadurch gekennzeichnet, dass eine Dichteinrichtung, zum Beispiel ein Radialwellendichtring, zwischen dem Eingangsteil der Kupplungseinrichtung und dem Kupplungsgehäuseabschnitt angeordnet ist. Die Dichteinrichtung dichtet den Innenraum der Kupplungseinrichtung nach außen hin ab.

Ein weiteres bevorzugtes Ausführungsbeispiel der Drehmomentübertragungseinrichtung ist dadurch gekennzeichnet, dass die Lagereinrichtung koaxial zu und radial außerhalb der Dichteinrichtung angeordnet ist. Dadurch wird eine einfach zu realisierende Möglichkeit geschaffen, die Lagereinrichtung in dem von der Dichteinrichtung nach außen hin abgedichteten Innenraum der Kupplungseinrichtung anzuordnen.

Ein weiteres bevorzugtes Ausführungsbeispiel der Drehmomentübertragungseinrichtung ist dadurch gekennzeichnet, dass die Lagereinrichtung in axialer Richtung überlappend zu der Dichteinrichtung angeordnet ist. Dadurch kann Bauraum in axialer Richtung eingespart werden.

Ein weiteres bevorzugtes Ausführungsbeispiel der Drehmomentübertragungseinrichtung ist dadurch gekennzeichnet, dass die Lagereinrichtung in einem Nassraum angeordnet ist, der von dem Kupplungsgehäuseabschnitt begrenzt wird. Dadurch wird auf einfache Art und Weise die Versorgung der Lagereinrichtung mit Schmiermittel aus dem Nassraum der Kupplungseinrichtung ermöglicht.

Ein weiteres bevorzugtes Ausführungsbeispiel der Drehmomentübertragungseinrichtung ist dadurch gekennzeichnet, dass zwei nass laufende Kupplungsanordnungen koaxial und in axialer Richtung überlappend zueinander angeordnet sind. Dadurch kann in axialer Richtung Bauraum eingespart werden.

Ein weiteres bevorzugtes Ausführungsbeispiel der Drehmomentübertragungseinrichtung ist dadurch gekennzeichnet, dass eine Schwingungsdämpfungseinrichtung zwischen die Abtriebswelle der Antriebseinheit und die Kupplungseinrichtung geschaltet ist. Die Schwingungskupplungseinrichtung dient dazu, eine unerwünschte Übertragung von Schwingungen von der Antriebseinheit auf das Getriebe zu reduzieren.

Ein weiteres bevorzugtes Ausführungsbeispiel der Drehmomentübertragungseinrichtung ist dadurch gekennzeichnet, dass der Kupplungsgehäuseabschnitt einstückig mit dem Getriebegehäuseabschnitt ausgebildet ist. Dadurch kann die Anzahl der Einzelteile reduziert werden.

Bei einem Antriebsstrang eines Kraftfahrzeugs ist die oben angegebene Aufgabe durcheine vorab beschriebene Drehmomentübertragungseinrichtung gelöst.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine erfindungsgemäße Drehmomentübertragungseinrichtung gemäß einem ersten Ausführungsbeispiel im Halbschnitt mit einem Dünnringkugellager;
- Figur 2: eine ähnliche Darstellung wie in Figur 1 gemäß einem zweiten Ausführungsbeispiel mit zwei Rollenlagern und
- Figur 3: eine ähnliche Darstellung wie in Figur 1 gemäß einem dritten Ausführungsbeispiel mit einem Gleitlager.

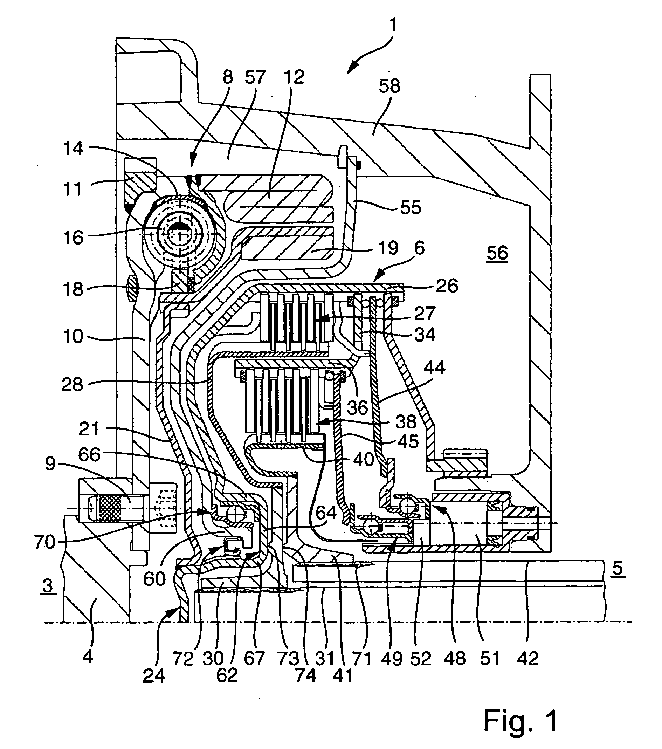

In Figur 1 ist ein Teil eines Antriebsstrangs 1 eines Kraftfahrzeugs dargestellt. Zwischen einer Antriebseinheit 3, insbesondere einer Brennkraftmaschine, von der eine Kurbelwelle 4 ausgeht, und einem Getriebe 5 ist eine nass laufende Doppelkupplung 6 in Lamellenbauweise angeordnet. Zwischen die Antriebseinheit 3 und die Doppelkupplung 6 ist eine Schwingungsdämpfungseinrichtung 8 geschaltet. Bei der Schwingungsdämpfungseinrichtung 8 handelt es sich um ein Zweimassenschwungrad.

Die Kurbelwelle 4 der Brennkraftmaschine 3 ist über eine Schraubverbindung 9 fest mit einem Eingangsteil 10 der Schwingungsdämpfungseinrichtung 8 verbunden. Das Eingangsteil 10 der Schwingungsdämpfungseinrichtung 8 hat im Wesentlichen die Gestalt einer sich in radialer Richtung erstreckenden Kreisringscheibe, an die radial außen ein Anlasserzahnkranz 11 angeschweißt ist. Außerdem ist an das Eingangsteil 10 der Schwingungsdämpfungseinrichtung 8 eine Schwungmasse 12 angeschweißt. Des Weiteren ist an dem Eingangsteil 10 der Schwingungsdämpfungseinrichtung 8 ein Schwingungsdämpferkäfig 14 befestigt, in dem mehrere Energiespeichereinrichtungen, insbesondere Federeinrichtungen 16, zumindest teilweise aufgenommen sind. In die Federeinrichtungen 16 greift ein Ausgangsteil 18 der Schwingungsdämpfungseinrichtung 8 ein. An dem Ausgangsteil 18 der Schwingungsdämpfungseinrichtung 8 ist eine weitere Schwungmasse 19 befestigt. Das Ausgangsteil 18 der Schwingungsdämpfungseinrichtung 8 ist über ein Verbindungsteil 21 fest mit einem Eingangsteil 24 der Doppelkupplung 6 verbunden. Das Kupplungseingangsteil 24 ist einstückig mit einem Außenlamellenträger 26 einer ersten Lamellen-Kupplungsanordnung 27 verbunden. Radial innerhalb des Außenlamellenträgers 26 ist ein Innenlamellenträger 28 der ersten Lamellen-Kupplungsanordnung 27 angeordnet. Der Innenlamellenträger 28 ist radial innen an einem Nabenteil 30 befestigt, das über eine Verzahnung drehfest mit einer ersten Getriebeeingangswelle 31 verbunden ist.

Das Kupplungseingangsteil 24 beziehungsweise der einstückig mit diesem verbundene Außenlamellenträger 26 der ersten Lamellen-Kupplungsanordnung 27 ist über ein Verbindungsteil 34 drehfest mit einem Außenlamellenträger 36 einer zweiten Lamellen-Kupplungsanordnung 38 verbunden. Radial innerhalb des Außenlamellenträgers 36 ist ein Innenlamellenträger 40 der zweiten Lamellen-Kupplungsanordnung 38 angeordnet, der radial innen fest mit einem Nabenteil 41 verbunden ist. Das Nabenteil 41 ist über eine Verzahnung drehfest mit einer zweiten Getriebeeingangswelle 42 verbunden, die als Hohlwelle ausgebildet ist. In der zweiten Getriebeeingangswelle 42 ist die erste Getriebeeingangswelle 31 drehbar angeordnet.

Die beiden Lamellen-Kupplungsanordnungen 27 und 38 werden über Betätigungshebel 44 und 45 betätigt, deren radial inneren Enden sich an Betätigungslagern 48, 49 abstützen. Die Betätigungslager 48, 49 werden mit Hilfe von Betätigungskolben 51, 52 in axialer Richtung betätigt. Die Betätigungskolben 51, 52 sind gegenüber den sich mit dem Kupplungseingangsteil 24 drehenden Betätigungshebeln 44, 45 feststehend angeordnet.

Zwischen dem Verbindungsteil 21 und dem Außenlamellenträger 26 der ersten Lamellen-Kupplungsanordnung 27 ist ein Kupplungsdeckel 55 angeordnet, der radial außen an einem Getriebegehäuseabschnitt 58 befestigt ist. Der Kupplungsdeckel 55 kann auch einstückig mit dem Getriebegehäuseabschnitt 58 ausgebildet sein. Der Kupplungsdeckel 55 trennt einen Nassraum 56, in dem die beiden Lamellen-Kupplungsanordnungen 27 und 38 angeordnet sind, von einem trockenen Aufnahmeraum 57, in dem die Schwingungsdämpfungseinrichtung 8 angeordnet ist. Der Kupplungsdeckel 55 weist radial innen ein, im Querschnitt betrachtet, im Wesentlichen L-förmiges Ende 60 auf, das in einen Ringraum 62 ragt, der von einem Abschnitt des Kupplungseingangsteils 24 mit einem U-förmigen Querschnitt gebildet wird. Der U-förmige Querschnitt des Aufnahmeraums 62 umfasst eine radial angeordnete Basis 64, von der sich zwei Schenkel 66 und 67 in axialer Richtung erstrecken.

Zwischen dem Kupplungseingangsteil 24 und dem Kupplungsdeckel 55 ist ein Dünnringkugellager 70 angeordnet, das sich sowohl in radialer als auch in axialer Richtung an dem Ende 60 des Kupplungsdeckels 55 einerseits und an der Basis 64 und dem Schenkel 66 des Kupplungseingangsteils 24 andererseits abstützt. Das Dünnringkugellager 70 weist eine gegenüber der radialen Richtung verkippte Berührungsnormale auf.

Radial innerhalb und axial überlappend zu dem Dünnringkugellager 70 ist ein Radialwellendichtring 72 zwischen dem Ende 60 des Kupplungsdeckels 55 und dem Kupplungseingangsteil 24 angeordnet. Das Dünnringkugellager 70 ist vollständig in dem Nassraum 56 angeordnet, der durch den Radialwellendichtring 72 von dem Trockenraum 57 getrennt ist. Das Dünnringkugellager 70 kann sowohl auf den Kupplungsdeckel 55 als auch auf das Kupplungseingangsteil 24 vormontiert werden. Das jeweils andere Teil kann bei der Montage über den entsprechenden Lagerring gleiten. Im Bereich der Lagereinrichtung sind keine zusätzlichen axialen Sicherungsringe notwendig. Eine Verschiebung der Teile zu dem Getriebe 5 wird durch in Reihe geschaltete Anschläge 73 und 74 an den Nabenteilen 30 und 41 sowie einen Sicherungsring 71 an der zweiten Getriebeeingangswelle 42 begrenzt. Die in Figur 1 dargestellte Lösung ist auch für Einfachkupplungen anwendbar.

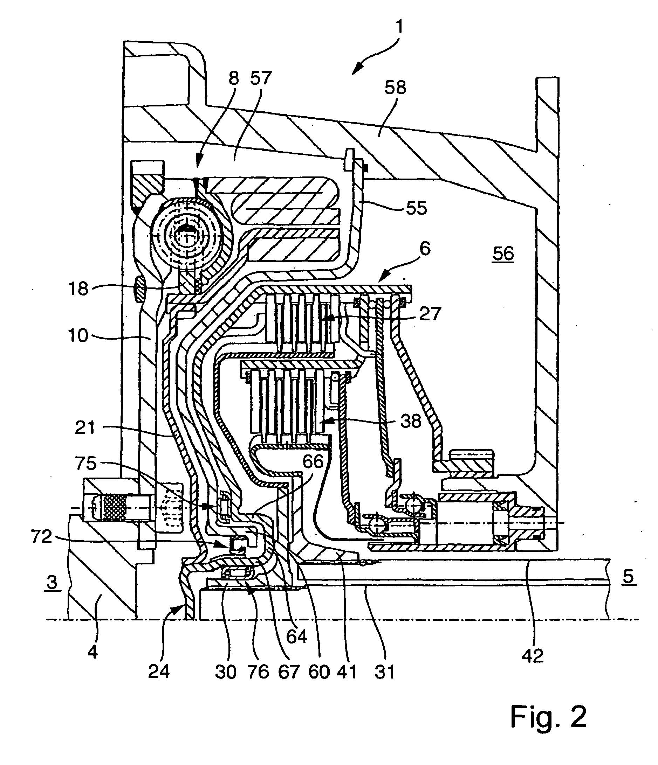

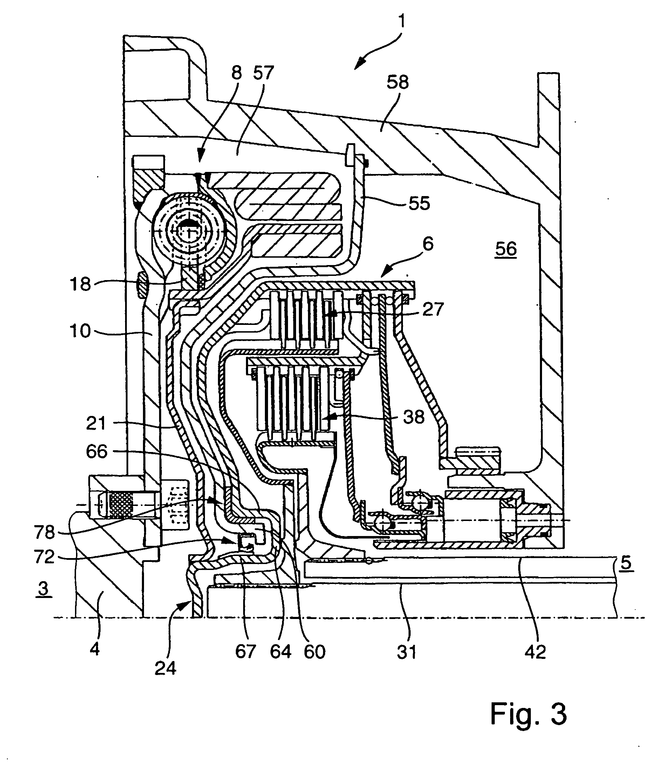

In den Figuren 2 und 3 sind ähnliche Darstellungen wie in Figur 1 gezeigt. Zur Bezeichnung gleicher Teile werden die gleichen Bezugszeichen verwendet. Um Wiederholungen zu vermeiden, wird auf die vorangegangene Beschreibung der Figur 1 verwiesen. Im Folgenden wird nur auf die Unterschiede zwischen den Ausführungsbeispielen eingegangen.

In Figur 2 ist in axialer Richtung zwischen dem Kupplungsdeckel 55 und dem Kupplungseingangsteil 24 radial außerhalb des Endes 60 des Kupplungsdeckels 55 ein Axialrollenlager 75 angeordnet. Radial innerhalb des Radialwellendichtrings 72 und axial überlappend zu diesem ist in radialer Richtung zwischen dem Schenkel 67 des Kupplungseingangsteils 24 und dem Nabenteil 30 ein Radialrollenlager 76 angeordnet. Die radiale Kraft stützt hier im Gegensatz zu den Lösungen in Figur 1 und 3 über die Nabe 30 an der Getriebeeingangswelle 31 ab. Beide Lager können auch als Gleitlager ausgebildet sein.

In Figur 3 ist zwischen dem Ende 60 des Kupplungsdeckels 55 und dem Kupplungseingangsteil 24 eine Radialgleitlagereinrichtung 78 mit einer axialen Anlauffläche angeordnet. Die Gleitlagereinrichtung 78 ist im Nassraum 56 angeordnet.

### Bezugszeichenliste

- 1,: Antriebsstrang
- 2.: -
- 3.: Antriebseinheit
- 4.: Kurbelwelle
- 5.: Getriebe
- 6.: Doppelkupplung
- 7.: -
- 8.: Schwingungsdämpfungseinrichtung
- 9.: Schraubverbindung
- 10.: Eingangsteil von 8
- 11.: Anlasserzahnkranz
- 12.: Masse
- 13.: -
- 14.: Schwingungsdämpfungskäfig
- 15.: -
- 16.: Federeinrichtung
- 17.: -
- 18.: Ausgangsteil von 8
- 19.: Masse
- 20.: -
- 21.: Verbindungsteil
- 22.: -
- 23.: -
- 24.: Kupplungseingangsteil
- 25.: -
- 26.: Außenlamellenträger
- 27.: erste Lamellen-Kupplungsanordnung
- 28.: Innenlamellenträger
- 29.: -
- 30.: Nabenteil
- 31.: erste Getriebeeingangswelle
- 32.: -
- 33.: -
- 34.: Verbindungsteil
- 35.: -
- 36.: Außenlamellenträger
- 37.: -
- 38.: zweite Lamellen-Kupplungsanordnung
- 39.: -
- 40.: Innenlamellenträger
- 41.: Nabenteil
- 42.: zweite Getriebeeingangswelle
- 43.: -
- 44.: Betätigungshebel
- 45.: Betätigungshebel
- 46.: -
- 47.: -
- 48.: Betätigungslager
- 49.: Betätigungslager
- 50.: -
- 51.: Betätigungskolben
- 52.: Betätigungskolben
- 53.: -
- 54.: -
- 55.: Kupplungsdeckel
- 56.: Nassraum
- 57.: Aufnahmeraum
- 58.: Getriebegehäuseabschnitt
- 59.: -
- 60.: Ende
- 61.: -
- 62.: Aufnahmeraum mit U-förmigem Querschnitt
- 63.: -
- 64.: Basis
- 65.: -
- 66.: Schenkel
- 67.: Schenkel
- 68.: -
- 69.: -
- 70.: Dünnringkugellager
- 71.: Sicherungsring
- 72.: Radialwellendichtring
- 73.: Anschlag
- 74.: Anschlag
- 75.: Axialrollenlager
- 76.: Radialrollenlager
- 77.: -
- 78.: Gleitlagereinrichtung
- 79.: -
- 80.: -

## Patentansprüche

1. Drehmomentübertragungseinrichtung im Antriebsstrang (1) eines Kraftfahrzeugs zur Drehmomentübertragung zwischen einer Antriebseinheit (3), insbesondere einer Brennkraftmaschine, mit einer Abtriebswelle (4), insbesondere einer Kurbelwelle, und einem Getriebe (5) mit mindestens einer Getriebeeingangswelle (31,42), wobei zwischen die Getriebeeingangswelle (31,42) und die Abtriebswelle (4) der Antriebseinheit (3) eine Kupplungseinrichtung (6) mit einem Eingangsteil (24) geschaltet ist, die einen Kupplungsgehäuseabschnitt (55), insbesondere einen Kupplungsdeckel, aufweist, der das die Kupplungseinrichtung (6) aufnehmende Volumen begrenzt und sich an einem Getriebegehäuseabschnitt (58) abstützt, **dadurch gekennzeichnet, dass** die Kupplungseinrichtung (6) eine nass laufende Kupplungsanordnung (27,38), insbesondere eine Lamellen-Kupplungsanordnung, umfasst, die durch Betätigungshebel (44,45) betätigbar ist, welche drehfest mit dem Eingangsteil (24) der Kupplungseinrichtung (6) verbunden sind und von außen über eine Aktorik betätigt werden, wobei weiterhin das die Betätigungshebel abstützende Eingangsteil (24) der Kupplungseinrichtung (6) mit Hilfe einer Lagereinrichtung (70;75;78) in axialer Richtung an dem Kupplungsgehäuseabschnitt (55) gelagert beziehungsweise abgestützt ist.

2. Drehmomentübertragungseinrichtung nach Anspruch 1, **dadurch gekennzeichnet, dass** zwischen dem Eingangsteil (24) der Kupplungseinrichtung (6) und dem Kupplungsgehäuseabschnitt (55) eine Axiallagereinrichtung (75) angeordnet ist.

3. Drehmomentübertragungseinrichtung nach einem der vorhergehenden Ansprüche, **dadurch gekennzeichnet, dass** zwischen dem Eingangsteil (24) der Kupplungseinrichtung (6) und dem Kupplungsgehäuseabschnitt (55) oder zwischen dem Eingangsteil (24) der Kupplungseinrichtung (6) und der mindestens einen Getriebeeingangswelle (31,42) eine Radiallagereinrichtung (76) angeordnet ist.

4. Drehmomentübertragungseinrichtung nach Anspruch 2 oder 3, **dadurch gekennzeichnet, dass** die Axiallagereinrichtung (75) radial außerhalb eines Endes (60) des Kupplungsgehäuseabschnitts (55) angeordnet ist.

5. Drehmomentübertragungseinrichtung nach Anspruch 4, **dadurch gekennzeichnet, dass** die Radiallagereinrichtung (76) radial innerhalb eines Radialwellendichtrings (72) angeordnet ist.

6. Drehmomentübertragungseinrichtung nach Anspruch 5, **dadurch gekennzeichnet, dass** die Radiallagereinrichtung (76) axial überlappend zu dem Radialwellendichtring (72) angeordnet ist.

7. Drehmomentübertragungseinrichtung nach einem der Ansprüche 4 bis 6, **dadurch gekennzeichnet, dass** die Radiallagereinrichtung (76) in radialer Richtung zwischen einem Schenkel (67) des Kupplungseingangsteils (24) und einem Nabenteil (30) angeordnet ist.

8. Drehmomentübertragungseinrichtung nach einem der vorhergehenden Ansprüche, **dadurch gekennzeichnet, dass** die Radiallagereinrichtung und die Axiallagereinrichtung aus einem einzigen Teil oder aus mehreren Teilen gebildet sind.

9. Drehmomentübertragungseinrichtung nach einem der vorhergehenden Ansprüche, **dadurch gekennzeichnet, dass** die Lagereinrichtung (70), zum Beispiel eine Dünnringkugellagereinrichtung, so gestaltet und zwischen dem Kupplungsgehäuseabschnitt (55) und dem Eingangsteil (24) der Kupplungseinrichtung (6) angeordnet ist, dass das Eingangsteil (24) der Kupplungseinrichtung (6) sowohl in radialer als auch in axialer Richtung an dem Kupplungsgehäuseabschnitt (55) abgestützt wird.

10. Drehmomentübertragungseinrichtung nach Anspruch 9, **dadurch gekennzeichnet, dass** die Lagereinrichtung (70) eine gegenüber der radialen Richtung verkippte Berührungsnormale aufweist.

11. Drehmomentübertragungseinrichtung nach einem der Ansprüche 1 bis 10, **dadurch gekennzeichnet, dass** zwischen dem Kupplungsgehäuseabschnitt (55) und dem Eingangsteil (24) der Kupplungseinrichtung (6) eine Gleitlagereinrichtung (78) angeordnet ist.

12. Drehmomentübertragungseinrichtung nach einem der vorhergehenden Ansprüche, **dadurch gekennzeichnet, dass** eine Dichteinrichtung (72), zum Beispiel ein Radialwellendichtring, zwischen dem Eingangsteil (24) und der Kupplungseinrichtung (6) und dem Kupplungsgehäuseabschnitt (55) angeordnet ist.

13. Drehmomentübertragungseinrichtung nach Anspruch 12, **dadurch gekennzeichnet, dass** die Lagereinrichtung (70;75;78) koaxial zu und radial außerhalb der Dichteinrichtung (72) angeordnet ist.

14. Drehmomentübertragungseinrichtung nach Anspruch 12 oder 1, **dadurch gekennzeichnet, dass** die Lagereinrichtung (70;75,76;78) in axialer Richtung überlappend zu der Dichteinrichtung (72) angeordnet ist.

15. Drehmomentübertragungseinrichtung nach einem der vorhergehenden Ansprüche, **dadurch gekennzeichnet, dass** die Lagereinrichtung (70;75;76, 78) in einem Nassraum (56) angeordnet ist, der von dem Kupplungsgehäuseabschnitt (55) begrenzt wird.

16. Drehmomentübertragungseinrichtung nach einem der vorhergehenden Ansprüche, **dadurch gekennzeichnet, dass** zwei nass laufende Kupplungsanordnungen (27,38) koaxial und in axialer Richtung überlappend zueinander angeordnet sind.

17. Drehmomentübertragungseinrichtung nach einem der vorhergehenden Ansprüche, **dadurch gekennzeichnet, dass** eine Schwingungsdämpfungseinrichtung (8) zwischen die Abtriebswelle (4) der Antriebseinheit (3) und die Kupplungseinrichtung (6) geschaltet ist.

18. Drehmomentübertragungseinrichtung nach einem der vorhergehenden Ansprüche, **dadurch gekennzeichnet, dass** der Kupplungsgehäuseabschnitt (55) einstückig mit dem Getriebegehäuseabschnitt (58) ausgebildet ist.

19. Antriebsstrang eines Kraftfahrzeugs mit einer Drehmomentübertragungseinrichtung nach einem der vorhergehenden Ansprüche.

## Claims

1. Torque-transmitting device in the drivetrain (1) of a motor vehicle for transmitting torque between a drive unit (3), in particular an internal combustion engine, having a drive output shaft (4), in particular a crankshaft, and a transmission (5) having at least one transmission input shaft (31, 42), with a clutch device (6) having an input part (24) being connected between the transmission input shaft (31, 42) and the drive output shaft (4) of the drive unit (3), which clutch device (6) has a clutch housing section (55), in particular a clutch cover, which delimits the volume taken up by the clutch device (6) and which is supported on a transmission housing section (58), **characterized in that** the clutch device (6) comprises a wet-running clutch arrangement (27, 38), in particular a multiplate clutch arrangement, which can be actuated by means of actuating levers (44, 45) which are rotationally fixedly connected to the input part (24) of the clutch device (6) and which are actuated externally by means of an actuator arrangement, with the input part (24), which supports the actuating lever, of the clutch device (6) additionally being mounted, or supported, in the axial direction on the clutch housing section (55) by means of a bearing device (70;75;78).

2. Torque-transmitting device according to Claim 1, **characterized in that** an axial bearing device (75) is arranged between the input part (24) of the clutch device (6) and the clutch housing section (55).

3. Torque-transmitting device according to one of the preceding claims, **characterized in that** a radial bearing device (76) is arranged between the input part (24) of the clutch device (6) and the clutch housing section (55) or between the input part (24) of the clutch device (6) and the at least one transmission input shaft (31, 42).

4. Torque-transmitting device according to Claim 2 or 3, **characterized in that** the axial bearing device (75) is arranged radially outside an end (60) of the clutch housing section (55).

5. Torque-transmitting device according to Claim 4, **characterized in that** the radial bearing device (76) is arranged radially within a radial shaft sealing ring (72).

6. Torque-transmitting device according to Claim 5, **characterized in that** the radial bearing device (76) is arranged so as to axially overlap the radial shaft sealing ring (72).

7. Torque-transmitting device according to one of Claims 4 to 6, **characterized in that** the radial bearing device (76) is arranged in the radial direction between a limb (67) of the clutch input part (24) and a hub part (30).

8. Torque-transmitting device according to one of the preceding claims, **characterized in that** the radial bearing device and the axial bearing device are formed from a single part or from a plurality of parts.

9. Torque-transmitting device according to one of the preceding claims, **characterized in that** the bearing device (70), for example a thin-ring ball-bearing device, is designed and arranged between the clutch housing section (55) and the input part (24) of the clutch device (6) in such a way that the input part (24) of the clutch device (6) is supported both in the radial direction and also in the axial direction on the clutch housing section (55).

10. Torque-transmitting device according to Claim 9, **characterized in that** the bearing device (70) has a normal contact line which is tilted with respect to the radial direction.

11. Torque-transmitting device according to one of Claims 1 to 10, **characterized in that** a plain bearing device (78) is arranged between the clutch housing section (55) and the input part (24) of the clutch device (6).

12. Torque-transmitting device according to one of the preceding claims, **characterized in that** a sealing device (72), for example a radial shaft sealing ring, is arranged between the input part (24) and the clutch device (6) and the clutch housing section (55).

13. Torque-transmitting device according to Claim 12, **characterized in that** the bearing device (70;75;78) is arranged coaxially with respect to and radially outside the sealing device (72).

14. Torque-transmitting device according to Claim 12 or 1, **characterized in that** the bearing device (70;75,76;78) is arranged so as to overlap the sealing device (72) in the axial direction.

15. Torque-transmitting device according to one of the preceding claims, **characterized in that** the bearing device (70;75;76,78) is arranged in a wet space (56) which is delimited by the clutch housing section (55).

16. Torque-transmitting device according to one of the preceding claims, **characterized in that** two wet-running clutch arrangements (27,38) are arranged coaxially with respect to one another and so as to overlap one another in the axial direction.

17. Torque-transmitting device according to one of the preceding claims, **characterized in that** a vibration damping device (8) is positioned between the drive output shaft (4) of the drive unit (3) and the clutch device (6).

18. Torque-transmitting device according to one of the preceding claims, **characterized in that** the clutch housing section (55) is formed in one piece with the transmission housing section (58).

19. Drivetrain of a motor vehicle, having a torque-transmitting device according to one of the preceding claims.

## Revendications

1. Dispositif de transfert de couple dans la chaîne de transmission (1) d'un véhicule automobile, pour le transfert de couple entre une unité d'entraînement (3), en particulier d'un moteur à combustion interne, comprenant un arbre de sortie (4), en particulier un vilebrequin, et une boîte de vitesses (5) avec au moins un arbre d'entrée de boîte de vitesses (31, 42), un dispositif d'embrayage (6) avec une partie d'entrée (24) étant monté entre l'arbre d'entrée de boîte de vitesses (31, 42) et l'arbre de sortie (4) de l'unité d'entraînement (3), lequel dispositif d'embrayage (6) présente une portion de carter d'embrayage (55), en particulier un couvercle d'embrayage, qui limite le volume recevant le dispositif d'embrayage (6) et qui s'appuie sur une portion de carter de boîte de vitesses (58), **caractérisé en ce que** le dispositif d'embrayage (6) comprend un agencement d'embrayage humide (27, 38), en particulier un agencement d'embrayage à lamelles, qui peut être actionné par des leviers d'actionnement (44, 45) qui sont connectés de manière solidaire en rotation à la partie d'entrée (24) du dispositif d'embrayage (6) et qui sont actionnés depuis l'extérieur par le biais d'un système d'actionneurs, la partie d'entrée (24) du dispositif d'embrayage (6) supportant le levier d'actionnement étant montée ou supportée à l'aide d'un dispositif de palier (70 ; 75 ; 78) dans la direction axiale sur la portion de carter d'embrayage (55).

2. Dispositif de transfert de couple selon la revendication 1, **caractérisé en ce qu'**un dispositif de palier axial (75) est disposé entre la partie d'entrée (24) du dispositif d'embrayage (6) et la portion de carter d'embrayage (55).

3. Dispositif de transfert de couple selon l'une quelconque des revendications précédentes, **caractérisé en ce qu'**un dispositif de palier radial (76) est disposé entre la partie d'entrée (24) du dispositif d'embrayage (6) et la portion de carter d'embrayage (55) ou entre la partie d'entrée (24) du dispositif d'embrayage (6) et l'au moins un arbre d'entrée de boîte de vitesses (31, 42).

4. Dispositif de transfert de couple selon la revendication 2 ou 3, **caractérisé en ce que** le dispositif de palier axial (75) est disposé radialement à l'extérieur d'une extrémité (60) de la portion de carter d'embrayage (55).

5. Dispositif de transfert de couple selon la revendication 4, **caractérisé en ce que** le dispositif de palier radial (76) est disposé radialement à l'intérieur d'une bague d'étanchéité d'arbre radiale (72).

6. Dispositif de transfert de couple selon la revendication 5, **caractérisé en ce que** le dispositif de palier radial (76) est disposé de manière à chevaucher axialement la bague d'étanchéité d'arbre radiale (72).

7. Dispositif de transfert de couple selon l'une quelconque des revendications 4 à 6, **caractérisé en ce que** le dispositif de palier radial (76) est disposé dans la direction radiale entre une branche (67) de la partie d'entrée d'embrayage (24) et une partie de moyeu (30).

8. Dispositif de transfert de couple selon l'une quelconque des revendications précédentes, **caractérisé en ce que** le dispositif de palier radial et le dispositif de palier axial sont formés d'une seule pièce ou de plusieurs pièces.

9. Dispositif de transfert de couple selon l'une quelconque des revendications précédentes, **caractérisé en ce que** le dispositif de palier (70), par exemple un dispositif de roulement à billes à bague mince, est configuré et disposé entre la portion de carter d'embrayage (55) et la partie d'entrée (24) du dispositif d'embrayage (6) de telle sorte que la partie d'entrée (24) du dispositif d'embrayage (6) soit supportée à la fois dans la direction radiale et dans la direction axiale sur la portion de carter d'embrayage (55).

10. Dispositif de transfert de couple selon la revendication 9, **caractérisé en ce que** le dispositif de palier (70) présente une normale de contact basculée par rapport à la direction radiale.

11. Dispositif de transfert de couple selon l'une quelconque des revendications 1 à 10, **caractérisé en ce qu'**un dispositif de palier lisse (78) est disposé entre la portion de carter d'embrayage (55) et la partie d'entrée (24) du dispositif d'embrayage (6).

12. Dispositif de transfert de couple selon l'une quelconque des revendications précédentes, **caractérisé en ce qu'**un dispositif d'étanchéité (72), par exemple une bague d'étanchéité d'arbre radiale, est disposé entre la partie d'entrée (24) et le dispositif d'embrayage (6) et la portion de carter d'embrayage (55).

13. Dispositif de transfert de couple selon la revendication 12, **caractérisé en ce que** le dispositif de palier (70 ; 75 ; 78) est disposé coaxialement et radialement en dehors du dispositif d'étanchéité (72).

14. Dispositif de transfert de couple selon la revendication 12 ou 1, **caractérisé en ce que** le dispositif de palier (70 ; 75, 76 ; 78) est disposé dans la direction axiale en chevauchant le dispositif d'étanchéité (72).

15. Dispositif de transfert de couple selon l'une quelconque des revendications précédentes, **caractérisé en ce que** le dispositif de palier (70 ; 75 ; 76 ; 78) est disposé dans un espace humide (56) qui est limité par la portion de carter d'embrayage (55).

16. Dispositif de transfert de couple selon l'une quelconque des revendications précédentes, **caractérisé en ce que** deux agencements d'embrayage humides (27, 38) sont disposés coaxialement l'un à l'autre et en se chevauchant mutuellement dans la direction axiale.

17. Dispositif de transfert de couple selon l'une quelconque des revendications précédentes, **caractérisé en ce qu'**un dispositif d'amortissement des oscillations (8) est monté entre l'arbre de sortie (4) de l'unité d'entraînement (3) et le dispositif d'embrayage (6).

18. Dispositif de transfert de couple selon l'une quelconque des revendications précédentes, **caractérisé en ce que** la portion de carter d'embrayage (55) est réalisée d'une seule pièce avec la portion de carter de boîte de vitesses (58).

19. Chaîne de transmission d'un véhicule automobile comprenant un dispositif de transfert de couple selon l'une quelconque des revendications précédentes.
